# EUROPÄISCHE PATENTSCHRIFT

(11) **EP 1 203 639 B1**
(45) Veröffentlichungstag und Bekanntmachung des Hinweises auf die Patenterteilung: **06.07.2005**
(21) Anmeldenummer: 01122868.1
(22) Anmeldetag: 25.09.2001
(51) Int. Cl.: B24D 15/02, B23D 79/08, B23B 51/10, B26B 5/00

(54) **Handwerkzeug zum Abheben von Material**
Hand tool for stripping material
Outil à main pour l'enlèvement du matériel

(30) Priorität: 25.09.2000 DE 20016651 U
(43) Veröffentlichungstag der Anmeldung: 08.05.2002
(73) Patentinhaber: NOGA ENGINEERING LTD., 22832 Israel (IL)
(72) Erfinder: Hirsch, Naftali, Nahariyya 22309 (IL)
(74) Vertreter: Kampfenkel, Klaus, Dipl.-Ing.

(56) Entgegenhaltungen:
- CH-A- 107 674
- DE-U- 8 712 102
- DE-U- 8 804 187
- US-A- 5 027 512
- US-A- 5 077 901

## Beschreibung

Die Erfindung betrifft ein Handwerkzeug zum Abheben von Material, insbesondere zum Entfernen von Graten gemäß dem Oberbegriff des Anspruchs 1 (siehe US 5 027 512).

Bei in Massenproduktion hergestellten Produkten kann infolge der eingesetzten Fertigungsverfahren, wie zum Beispiel durch verschiedene Guß-, Schmiede-, Preß- und/oder Walztechniken, ein unerwünschter Werkstoffrand ausgebildet werden. Ursache hierfür sind in erster Linie Spalte oder sonstige Unregelmäßigkeiten innerhalb der Werkzeugformen, aus denen infolge eines Werkstoffüberschusses Grate hervortreten oder durch Abquetschungen ungewollte Rander bzw. Trennfugen entstehen. Unregelmäßigkeiten an Flächen, Kanten und/oder Ecken, hierin allgemein mit Grat bezeichnet, können auch infolge von Erkaltungsvorgängen beispielsweise im Anschluss an ein durchgeführtes Spritzgussverfahren zur Herstellung von Kunststoffartikeln entstehen. Ferner können Grate beispielsweise auch durch spanende Materialbearbeitung hervorgerufen werden.

Um beispielsweise passgenaue Anordnungen zwischen einzelnen Komponenten bzw. Werkstücken zu erreichen und eine Verletzungsgefahr zu vermeiden, werden derartige unerwünschte Randausbildungen durch Materialabtragung, insbesondere durch Entgraten entfernt.

Entgratungswerkzeuge zum manuellen oder maschinellen Entgraten sind aus dem Stand der Technik bekannt. Herkommlicherweise weisen derartige Werkzeuge eine scharfe, geradlinig verlaufende Klinge auf.
Aus der japanischen Patentanmeldung Nr. 07 019 790 ist ein solches Werkzeug bekannt, welches eine Klinge aus Keramik mit einer geradlinig verlaufenden Schneidkante aufweist.

Nachteilig hierbei ist insbesondere, dass beim Ab- oder Entgraten von Kanten und insbesondere von ebenen Flächen das handgeführte Werkzeug bereits bei leichtem Verkippen infolge der scharfen, eben verlaufenden Schneidkante eine Beschädigung des Werkstücks herbeifuhren kann.

Aus der US-A-5,027,512 ist ein Handwerkzeug zum Entgraten bekannt. Das Handwerkzeug weist einen langlichen Griff auf, der an einem Ende als Buchse ausgebildet ist, um herkömmliche Werkzeugköpfe zum Entgraten aufnehmen zu können. Die Aufnahmebuchse ist an die Konturen der aufzunehmenden Werkzeugköpfe angepasst.

Aus der DE 88 04 187 U ist ein Handschabewerkzeug bekannt, welches eine gekrümmte Klinge, die spitzwinklig zuläuft, aufweist.

Aus der CH 107674 ist ein Werkzeug zum Schaben von metallenen Bearbeitungsflächen bekannt. Hierzu ist ein Schaber vorgesehen, dessen beide Längsseiten und dessen vordere, gekrümmte Stirnseite als Schneiden ausgebildet sind.

Aufgabe der Erfindung ist es somit, ein Handwerkzeug mit einem weiterentwickelten Werkzeugkopf bereitzustellen.

Diese Aufgabe wird bereits auf höchst überraschende Weise durch ein Handwerkzeug mit den Merkmalen des Anspruchs 1 gelöst.

Vorteilhafte und/oder bevorzugte Ausführungsformen bzw. Weiterbildungen sind Gegenstand der Unteransprüche.

Dazu ist ein Handwerkzeug zum Abheben von Material, insbesondere zum Entfernen von Graten, vorgesehen, welches einen Griff und einen daran befestigbaren Werkzeugkopf aufweist. Der Werkzeugkopf weist eine erste Arbeitsfläche auf, die wenigstens abschnittsweise gekrümmt verläuft und eine Breite besitzt, die der Dicke des Werkzeugkopfes entspricht. Darüber hinaus ist an dem Werkzeugkopf eine kerbenförmige Aussparung vorgesehen, mit welcher beispielsweise scharfe, nach aussen hervorstehende Zapfen oder Kanten entfernt, insbesondere abgerissen oder abgebrochen werden können.

Die gekrümmte Arbeitsfläche hat gegenüber einer geradlinigen Schneidefläche insbesondere den Vorteil, dass eine präzise, punktgenaue Materialabtragung möglich ist.

In Abhangigkeit davon, ob Flachen oder Kanten bearbeitet werden sollen, ist eine Arbeitsfläche mit konvexer bzw. konkaver Krümmung vorteilhaft.

Um den Einsatzbereich des Handwerkzeugs zu vergrößern, weist der Werkzeugkopf eine zweite, vorzugsweise parallel zur Längsachse des Griffs verlaufende Arbeitsfläche auf, die als im wesentlichen geradlinig verlaufende Schneide ausgebildet ist.

Um ferner eine lange Haltbarkeit des erfindungsgemäßen Werkzeugs auch bei großen mechanischen Belastungen sowie eine verbesserte Widerstandsfähigkeit gegen Abnutzungs- und/oder Verschleißerscheinungen zu gewahrleisten, sieht die Erfindung ferner vor, dass der Werkzeugkopf im Wesentlichen aus keramischem Material hergestellt ist. Dies hat überdies den Vorteil, dass auch mit Glasfasern verstärkte Werkstoffe bearbeitet werden können.

Aus Sicherheitsgründen ist ferner daran gedacht, den Bereich, an dem die erste und zweite Arbeitsfläche unter einem spitzen Winkel zusammenlaufen, abzurunden, wodurch gefährliche Spitzen am Werkzeugkopf vermieden werden.

Zweckmäßigerweise weist der Werkzeugkopf einen Befestigungsabschnitt, beispielsweise in Form eines Schaftes, zum lösbaren Befestigen an oder in dem Griff auf, so dass ein abgenutzer oder beschädigter Werkzeugkopf schnell und einfach ausgetauscht werden kann. Darüber hinaus ist hierdurch sichergestellt, dass Werkzeugköpfe mit unterschiedlichen speziellen Ausführungsformen je nach Anwendungsbedarf ausgewechselt werden können.

Die Erfindung wird nachfolgend am Beispiel einer bevorzugten Ausfuhrungsform unter Bezugnahme auf die beigefügten Zeichnungen im Einzelnen beschrieben.
Es zeigen:
- Fig. 1: eine Seitenansicht einer erfindungsgemäßen Ausfuhrungsform des Handwerkzeuges,
- Fig. 2: eine Detailansicht des Werkzeugkopfes aus derselben Blickrichtung wie Fig. 1 und
- Fig. 3: eine von der entgegengesetzten Richtung aus gesehene Detailansicht des Werkzeugkopfes gemäß Fig. 2.

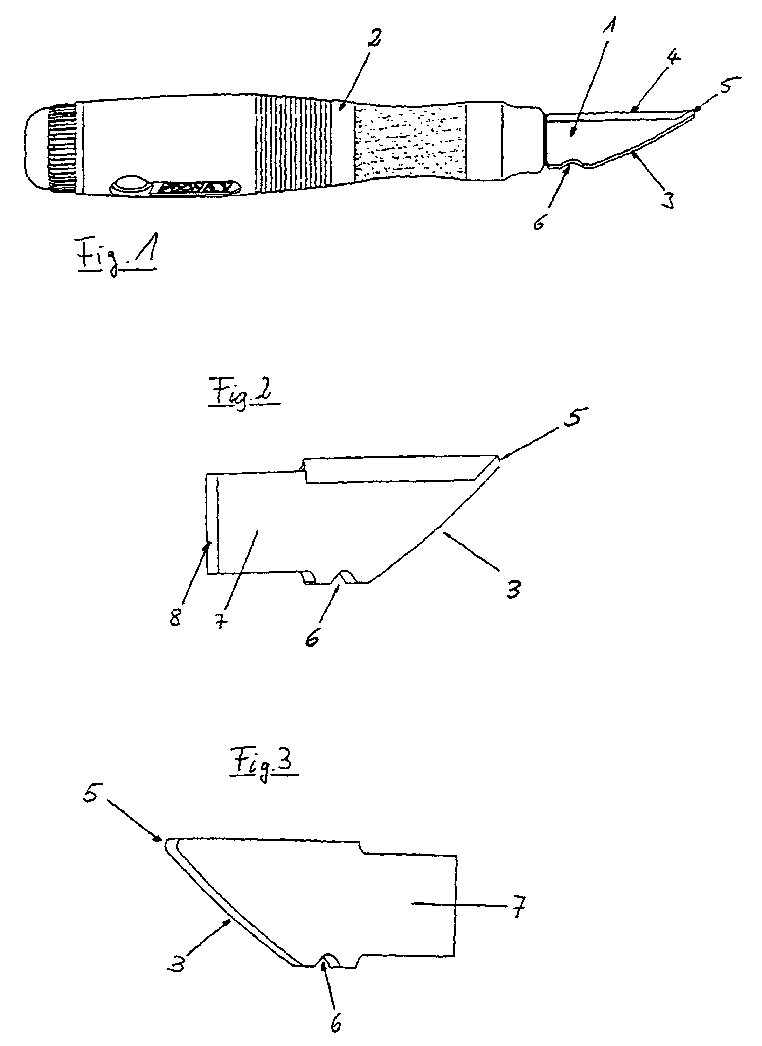

Nachfolgend wird zunächst auf Fig. 1 Bezug genommen, welche eine bevorzugte Ausfuhrungsform des erfindungsgemäßen Handwerkzeuges darstellt. Das Werkzeug umfasst einen im wesentlichen ebenen, blattförmigen Werkzeugkopf 1, der mit einem Handgriff 2, wie nachfolgend näher beschrieben wird, lösbar verbunden ist. Der Handgriff 2 weist eine Form sowie eine Oberfläche auf, die einem Benutzer einen grifffesten und im Wesentlichen abrutschsicheren Halt bieten.

Nachfolgend wird der Werkzeugkopf 1 unter zusätzlicher Bezugnahme auf die Figuren 2 und 3, welche jeweils eine vergrößerte Detailansicht des Werkzeugkopfes 1 von vorne bzw. von hinten darstellen, beschrieben. Der Werkzeugkopf 1 ist aus keramischen Material hergestellt und aufgrund der hierdurch erzielten mechanischen Härte und Widerstandsfähigkeit somit auch für die Bearbeitung von beispielsweise Glasfaser-verstärkten Kunststoffen geeignet.

Der Werkzeugkopf 1 weist eine Seite oder Kante 4 auf, die parallel zur Längsachse des Handgriffs 2 verläuft und als Schneide ausgebildet ist. Eine weitere Seite des Werkzeugkopfes 1 bildet eine gekrümmte Bearbeitungsfläche 3, die mit der Schneide 4 einen spitzen Winkel bildet, der zum Handgriff 2 hin geöffnet ist. Die Bearbeitungsfläche 3 weist eine Breite auf, die der Dicke des blättchenförmigen Werkzeugkopfes 1 entspricht, wodurch die Auflagefläche auf der Oberfläche eines zu bearbeitenden Werkstücks gegenüber der Schneide 4 vergrößert ist. Die Krümmung der Bearbeitungsfläche 3 verlauft im vorliegenden Beispiel konvex, so dass Vorsprünge auf der zu entgratenden Oberfläche präzise entfernt werden können, da infolge der Krümmung nur eine punktformige Druckausübung auf das zu bearbeitende Werkstück erfolgt. Je nach speziellem Anwendungsfall oder zu bearbeitendem Werkstück kann der Werkzeugkopf 1 auch alternativ oder zusatzlich zu der konvex gekrummten Bearbeitungsfläche 3 eine konkav gekrümmte Fläche (nicht dargestellt) aufweisen.

Die gekrümmte Bearbeitungsfläche 3 und die geradlinig verlaufende Schneide 4 schließen, wie gesagt, einen spitzen Winkel ein, wobei der Bereich an deren Verbindungsstelle 5 abgerundet ist, um Verletzungen des Benutzers auch bei unsachgemäßem Benutzen weitestgehend auszuschließen.

An die gekrümmte Bearbeitungsfläche 3 schließt sich ein parallel zur Längsachse des Handgriffs 2 verlaufender Abschnitt an, in dem eine Kerben-förmige Aussparung 6 ausgebildet ist, mit welcher sich insbesondere zapfenartige Werkstoffauskragungen auf einfache Weise entfernen lassen.

Der Werkzeugkopf 1 weist einen in Richtung zum Handgriff 2 weisenden Schaft 7 auf, der an den Abschnitt mit der Kerbenformigen Aussparung 6 und an die Schneide 4 anschließt. Der Schaft 7 kann in eine entsprechende Öffnung im Handgriff 2 eingesetzt werden, wie dies in Fig. 1 gezeigt ist.

Bei einer alternativen Ausführung kann der Schaft 7 mit einer Durchgangsoffnung versehen sein, in welche eine Fixierschraube, wie zum Beispiel eine Madenschraube, von außen durch den Handgriff 2 einschraubbar ist. Es sei jedoch darauf hingewiesen, dass auch andere dem Fachmann an sich bekannte lösbare Befestigungseinrichtungen zur Aufnahme des Werkzeugkopfes 1 verwendet werden können.

Das erfindungsgemaße Werkzeug stellt somit in der beschriebenen Ausfuhrungsform ein Multifunktionswerkzeug dar, mit welchem sich bei der Material-abtragenden Nachbearbeitung von Werkstoffen viele unterschiedliche Bearbeitungsschritte durchführen lassen, ohne dass der Benutzer das Werkzeug wechseln oder den beschriebenen Werkzeugkopf 1 gegen einen anderen austauschen muss.

## Patentansprüche

1. Handwerkzeug zum Abheben von Material, insbesondere zum Entfernen von Graten, mit einem Griff (2) und einem daran befestigbaren Werkzeugkopf (1),
wobei der Werkzeugkopf (1) eine erste Arbeitsfläche (3) aufweist, die wenigstens abschnittsweise gekrümmt verlauft und eine Breite besitzt, die der Dicke des Werkzeugkopfes (1) entspricht,
**dadurch gekennzeichnet, dass**
der Werkzeugkopf (1) eine Kerben-förmige Aussparung (6) zum Entfernen von zapfenartigen Werkstoffauskragungen aufweist.

2. Handwerkzeug nach Anspruch 1, **dadurch gekennzeichnet, dass** die erste Arbeitsfläche (3) wenigstens abschnittsweise konkav oder konvex gekrümmt ist.

3. Handwerkzeug nach Anspruch 1 oder 2, **dadurch gekennzeichnet, dass** der Werkzeugkopf (1) eine zweite, vorzugsweise parallel zur Längsachse des Griffs (2) verlaufende Arbeitsfläche (4) aufweist, die als im wesentlichen geradlinig verlaufende Schneide ausgebildet ist.

4. Handwerkzeug nach Anspruch 3, **dadurch gekennzeichnet, dass** die erste (3) und zweite Arbeitsfläche (4) einen spitzen Winkel einschließen und an deren Verbindungsstelle (5) einen abgerundeten Bereich bilden.

5. Handwerkzeug nach einem der Ansprüche 1 bis 4, **dadurch gekennzeichnet, dass** der Werkzeugkopf (1) aus keramischem Material hergestellt ist.

6. Handwerkzeug nach einem der Ansprüche 1 bis 5, **dadurch gekennzeichnet, dass** der Werkzeugkopf (1) einen Befestigungsabschnitt (7) zur lösbaren Befestigung an oder in dem Griff (2) aufweist.

## Claims

1. Hand tool for the removal of material, in particular for the removal of burrs, with a handle (2) and a tool head (1) which can be fixed to the same,
wherein the tool head (1) has a first work area (3) which is bent at least in sections and has a breadth which corresponds to the thickness of the tool head (1),
**characterised in that**
the tool head (1) has a recess (6) in the form of a groove for the removal of neck-like material projections.

2. Hand tool according to claim 1, **characterised in that** the first work area (3) is concavely or convexly bent at least in sections.

3. Hand tool according to claim 1 or 2, **characterised in that** the tool head (1) has a second work area (4) preferably running parallel to the longitudinal axis of the handle (2) which is forms as a cutting edge running essentially in a straight line.

4. Hand tool according to claim 3, **characterised in that** the first (3) and second work area (4) incorporate an acute angle form a rounded-off region at the connection point (5).

5. Hand tool according to one of the claims 1 to 4, **characterised in that** the tool head (1) is manufactured from ceramic material.

6. Hand tool according to one of the claims 1 to 5, **characterised in that** the tool head (1) has a fixing section (7) for detachable fixing on or in the handle (2).

## Revendications

1. Outil à main pour l'enlèvement de matériau, en particulier l'élimination de bavures, avec un manche (2) et une tête d'outil (1) fixable dessus, la tête d'outil (1) présentant une première surface de travail (3) qui évolue de manière curviligne au moins par sections et qui dispose d'une largeur qui correspond à l'épaisseur de la tête d'outil (1), **caractérisé en ce que** la tête d'outil (1) présente un évidement en forme d'encoche (6) pour l'enlèvement de saillies de matériau de type tenon.

2. Outil à main selon la revendication 1, **caractérisé en ce que** la première surface de travail (3) est curviligne de manière concave ou convexe au moins par sections.

3. Outil à main selon la revendication 1 ou 2, **caractérisé en ce que** la tête d'outil (1) présente une seconde surface de travail (4) évoluant de préférence parallèlement à l'axe longitudinal du manche (2), ladite seconde surface de travail étant réalisée sous forme d'arête de coupe évoluant pour l'essentiel en ligne droite.

4. Outil à main selon la revendication 3, **caractérisé en ce que** la première (3) et la seconde surface de travail (4) renferment un angle aigu et forment une zone arrondie au niveau de leur point de jonction (5).

5. Outil à main selon l'une quelconque des revendications 1 à 4, **caractérisé en ce que** la tête d'outil (1) est fabriquée à partir d'un matériau céramique.

6. Outil à main selon l'une quelconque des revendications 1 à 5, **caractérisé en ce que** la tête d'outil (1) présente une section de fixation (7) en vue de la fixation amovible sur ou dans le manche (2).
